# EUROPÄISCHE PATENTANMELDUNG

(11) **EP 0 837 307 A1**
(43) Veröffentlichungstag der Anmeldung: **22.04.1998**
(21) Anmeldenummer: 97116460.3
(22) Anmeldetag: 22.09.1997
(51) Int. Cl.: G01M 15/00, G01L 23/16, F02B 77/08

(54) **Optische Brennraumsonde**

(30) Priorität: 16.10.1996 AT 1815/96
(71) Anmelder: JENBACHER ENERGIESYSTEME AG, A-6200 Jenbach (AT)
(72) Erfinder: Pockstaller, Franz, 6200 Jenbach (AT); Fally, Martin, 6020 Innsbruck (AT)
(74) Vertreter: Torggler, Paul Norbert

(57) **Zusammenfassung**

Optische Brennraumsonde mit einem transparenten Lichtleiter und einer diesen umgebenden Hülle vorzugsweise aus Metall. Der Lichtleiter (1) ist auf einem Teil (l₁) seiner Länge mittels einer elastischen Klebemasse (3) mit der Hülle (2) verklebt.

## Beschreibung

Die Erfindung betrifft eine optische Brennraumsonde mit einem transparenten Lichtleiter und einer diesen umgebenden Hülle vorzugsweise aus Metall.

Es ist bereits bekannt, mittels optischer Brennraumsonden das Verbrennungslicht einer Brennkraftmaschine zu beobachten und auszuwerten. Die Anforderungen an eine solche optische Brennraumsonde sind sehr hoch, da sie starken Temperatur- und Druckschwankungen ausgesetzt ist. Meist wird als Lichtleiter ein Glasstab (Quarzglas) oder Saphirstab verwendet, der irgendwie von einer Metallhülle umgeben ist.

Aufgabe der Erfindung ist es, eine optische Brennraumsonde der eingangs genannten Gattung zu schaffen, die für den Dauerbetrieb in einem Verbrennungsmotor geeignet ist, also insbesondere trotz der thermischen Einflüsse eine lange Lebensdauer aufweist.

Gemäß einem ersten Aspekt der vorliegenden Erfindung wird dies dadurch erreicht, daß der Lichtleiter auf einem Teil seiner Länge mittels einer elastischen Klebemasse mit der Hülle verklebt ist.

Mittels einer solchen elastischen Klebeverbindung kann der Einfluß der unterschiedlichen Temperaturausdehnungs-Kohäfizienten des Lichtleiters einerseits und der vorzugsweise metallischen Hülle andererseits ausgeglichen werden. Eine elastische Klebeverbindung weist somit Vorteile gegenüber einer Eindringung von Harz zwischen dem Lichtleiter und der Hülle auf, wie dies beispielsweise im US-Patent 4,444,169 gezeigt ist.

Als Klebemassen eignen sich bevorzugt kautschukelastisch feste Klebemassen.

Im 'Betrieb wird das brennraumseitige Ende der Brennraumsonde sehr heiß. Um diesen Temperatureinfluß möglichst von der elastischen Klebemasse fernzuhalten, ist vorgesehen, daß der Klebebereich (Bereich, in dem der Lichtleiter mit der Hülle über die Klebemasse verbunden ist) weiter vom brennraumseitigen Ende der Brennraumsonde entfernt ist, als ein Verbindungsbereich, in dem die Brennraumsonde mit dem Zylinderkopf der Brennkraftmaschine verbunden ist. Über diesen Verbindungsbereich wird nämlich bereits ein Großteil der Wärme abgeführt, sodaß der brennraumferne (hintere) Bereich der Brennraumsonde kühler ist und somit ungünstige Temperatureinflüsse auf die Klebemasse weitgehend vermieden werden können.

Gemäß einem weiteren Aspekt der Erfindung ist vorgesehen, daß die Hülle in mindestens einem Anlagebereich an den Lichtleiter heranreicht, wobei der Lichtleiter dort bei Raumtemperatur im Schiebesitz oder Gleitsitz in der Hülle geführt ist, und daß der Lichtleiter außerhalb dieses zumindest einen Anlagebereiches mittels einer Klebemasse mit der Hülle verklebt ist. Im Rahmen der vorliegenden Erfindung wird unter Raumtemperatur eine Temperatur von 20°C verstanden.

Der oben genannte Aspekt der Erfindung erlaubt es, den Lichtleiter und die Hülle bei der Montage (bei Raumtemperatur) exakt relativ zueinander zu positionieren und dann diese relative Positionierung zueinander mittels der Klebemasse zwischen Lichtleiter und Hülle zu fixieren, wobei beim "Aushärten" bzw. Vernetzen der Klebemasse die Anlagebereiche den Lichtleiter mechanisch relativ zur Hülle hin in einer wohldefinierten Lage halten. Im Betrieb, also bei höheren Temperaturen hebt dann die Hülle aufgrund des größeren Temperaturausdehnungs-Kohäfizienten in den Anlagebereichen etwas vom Lichtleiter ab. Es liegt dann im wesentlichen an der Klebemasse, die Verbindung zwischen Lichtleiter und Hülle aufrecht zu erhalten, wobei die Klebemasse den Lichtleiter am Herausfallen aus der Hülle hindert und die von der Verbrennung hervorgerufenen Druckbelastungen zumindest zum Teil aufnimmt, ohne daß es durch thermische Einflüsse zu Spannungen zwischen der Hülle und dem Lichtleiter kommt. Um die hohen Druckbelastungen, die durch die Verbrennung hervorgerufen werden, besser aufnehmen zu können, ist vorteilhaft vorgesehen, daß im Bereich des brennraumfernen Endes der Brennraumsonde ein quer zur Längsrichtung des Lichtleiters verlaufender mechanischer Anschlag angeordnet ist, der zuverlässig verhindert, daß sich der Lichtleiter durch einen von der Verbrennung ausgeübten Druck in die Brennraumsonde hinein bewegt.

Während also beim Zusammenbau der Brennraumsonde bei Raumtemperatur zunächst die Anlagebereiche mit ihrem Schiebe- oder Gleitsitz den Lichtleiter relativ zur Hülle lagemäßig mechanisch festlegt, kommt diese Aufgabe im Betrieb, also bei höheren Temperaturen, vor allem der Klebemasse und gegebenenfalls dem genannten Anschlag zu.

Weitere Vorteile und Einzelheiten der Erfindung werden anhand der nachfolgenden Figurenbeschreibung näher erläutert.

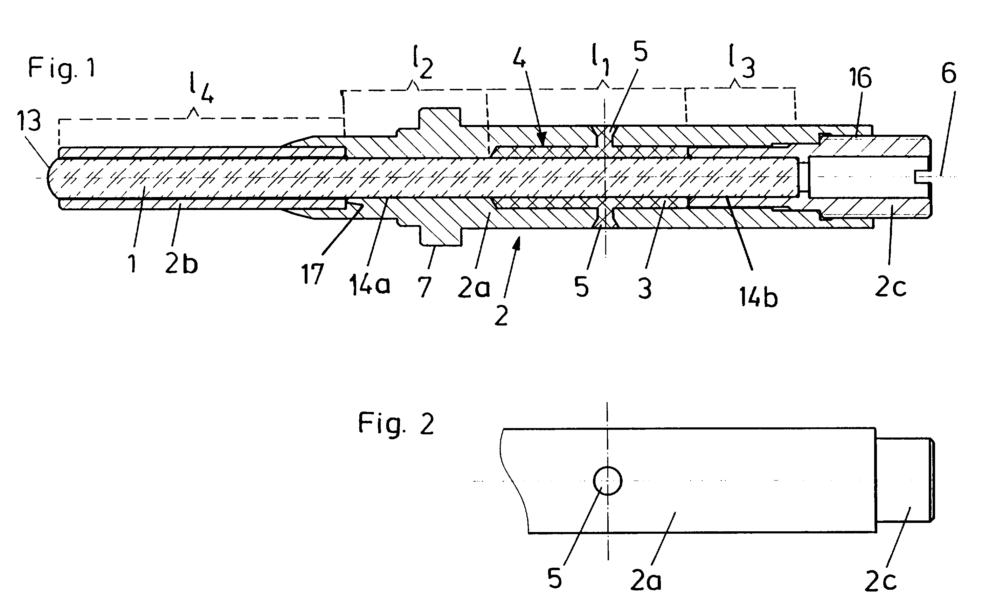

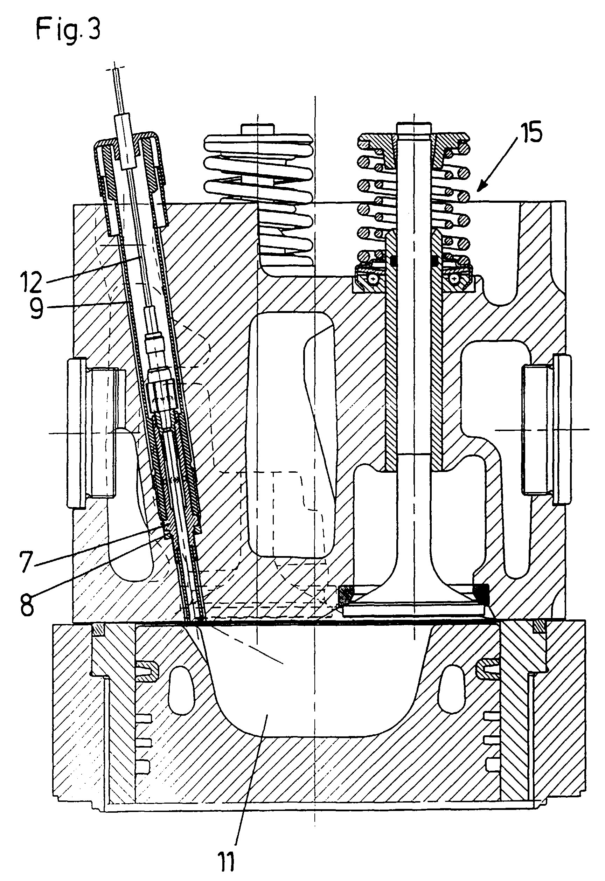

Die Fig. 1 zeigt einen Querschnitt durch ein Ausführungsbeispiel einer erfindungsgemäßen optischen Brennraumsonde. Die Fig. 2 zeigt eine Ansicht auf das brennraumferne Ende dieser Brennraumsonde. Die Fig. 3 zeigt den Einbau der erfindungsgemäßen Brennraumsonde in den Zylinderkopf einer Brennkraftmaschine.

Die in Fig. 1 dargestellte Brennraumsonde weist einen transparenten länglichen Lichtleiter 1, beispielsweise einen zylindrischen Glasstab oder Saphierstab auf. Dieser ist von einer allgemein mit 2 bezeichneten metallischen Hülle umgeben, die beim dargestellten Ausführungsbeispiel aus drei Teilen 2a,2b und 2c besteht.

Erfindungsgemäß ist der Lichtleiter 1 auf einem Teil seiner Länge mittels einer elastischen Klebemasse 3 mit der Hülle 2 verklebt. Diese Klebemasse erstreckt sich über den Klebebereich l₁, der sich in der Längsrichtung des Lichtleiters 1 über eine Länge von 20% bis 40% der Länge des Lichtleiters 1 erstreckt. Als Klebemasse eignen sich insbesondere solche Klebemassen, die nach dem "Aushärten" bzw. Vernetzen kautschukelastisch fest sind. Umfangmäßig erstreckt sich der Klebebereich günstigerweise um den gesamten Lichtleiter herum, um diesen allseitig zu halten und eine möglichst große Klebefläche zu haben.

Die Klebemasse kann im flüssigen bzw. fließenden Zustand in eine Klebekammer 4 eingebracht werden. Dazu sind beim vorliegenden Ausführungsbeispiel vier radiale Bohrungen 5 vorgesehen.

Bis auf die genannten radialen Bohrungen 5 ist die Brennraumsonde insgesamt im wesentlichen rotationssymmetrisch um die Längsachse 6 ausgebildet.

Als Verbindungsbereich 7, über den die Brennraumsonde mit dem Zylinderkopf 8 einer Brennkraftmaschine verbindbar ist, ist beim dargestellten Ausführungsbeispiel ein radial abstehender Flansch 7 vorgesehen, der in etwa im mittleren Bereich der Brennraumsonde angeordnet ist.

Wie die Fig. 3 zeigt, wird dieser Flansch 7 im eingebauten Zustand zwischen einer Dichtung 8 und einer eingeschraubten Hülse 9 eingeklemmt und damit die Brennraumsonde gegenüber dem Zylinderkopf 17 fixiert. Das vom starren Lichtleiter 1 durchgelassene Licht aus dem Brennraum 11 gelangt über einen weiteren Lichtleiter 12 zu einer nicht dargestellten Auswertschaltung.

Um die thermische Belastung für die Klebemasse 3 möglichst gering zu halten, ist diese hinter dem Flansch 7 angeordnet, also weiter vom brennraumseitigen Ende 13 der Sonde entfernt als dieser Flansch 7.

Bei Raumtemperatur, also beim Zusammenbau der optischen Brennraumsonde liegt die Hülle 2 beim dargestellten Ausführungsbeispiel über zwei Anlagebereiche 14a, 14b am Lichtleiter an, wobei sich diese Bereiche über die Länge l₂ bzw. l₃ erstrecken. Diese Anlagebereiche sind so dimensioniert, daß der Lichtleiter dort bei Raumtemperatur im Schiebesitz oder Gleitsitz in der Hülle geführt ist, also mechanisch positioniert ist. Diese Relativlage zwischen Lichtleiter 1 und Hülle 2 wird durch eine elastische Klebemasse 3 fixiert und zwar auch bei erhöhten Temperaturen im Betrieb, bei denen das Spiel zwischen Lichtleiter 1 und Hülle 2 größer wird.

Damit die Klebemasse 3 im Betrieb nicht die gesamten Druckbelastungen auf den Lichtleiter 1 aufnehmen muß, ist im Bereich des brennraumfernen Endes der Brennraumsonde ein quer zur Längsrichtung des Lichtleiters 1 verlaufender Anschlag 17 vorgesehen. Dieser ist am Teil 2c der Hülle ausgebildet, wobei dieser Teil 2c in den Teil 2a über ein Gewinde 16 eingeschraubt werden kann.

Am gegenüberliegenden brennraumseitigen Ende ist ein Teil gesonderter Vorderteil 2b eingeschraubt, der bei Raumtemperatur einen Abstand von einem bis fünf Zehntel Millimetern vom Lichtleiter 1 aufweist, also nicht direkt am Lichtleiter anliegt. Im Betrieb wird dieser Abstand sogar noch größer. Der Vorderteil 2b ist mit dem Teil 2a verbunden und erstreckt sich über die Länge l₄.

Die Erfindung ist selbstverständlich nicht auf die dargestellten Ausführungsbeispiele beschränkt. Beispielsweise ist auch eine einstückige Hülle durchaus denkbar und möglich. Die Hülle besteht zwar vorzugsweise aus Metall, kann aber auch aus anderen hochtemperaturbeständigen Materialien wie beispielsweise Keramik bestehen. Beim dargestellten Ausführungsbeispiel ist ein einziger Klebebereich mit der Länge l₁ vorgesehen. Es können natürlich auch grundsätzlich zwei oder mehrere Klebebereiche vorgesehen sein.

## Patentansprüche

1. Optische Brennraumsonde mit einem transparenten Lichtleiter und einer diesen umgebenden Hülle vorzugsweise aus Metall, dadurch gekennzeichnet, daß der Lichtleiter (1) auf einem Teil (l₁) seiner Länge mittels einer elastischen Klebemasse (3) mit der Hülle (2) verklebt ist.

2. Brennraumsonde nach Anspruch 1, dadurch gekennzeichnet, daß die Klebemasse (3) kautschukelastisch fest.

3. Brennraumsonde nach Anspruch 1 oder 2, dadurch gekennzeichnet, daß sich der Klebebereich in Längsrichtung des Lichtleiters über eine Länge (l₁) von 20% - 40 % der Länge des Lichtleiters (1) erstreckt.

4. Brennraumsonde nach einem der Ansprüche 1 - 3, dadurch gekennzeichnet, daß sich der Klebebereich umfangmäßig um den gesamten Lichtleiter (1) herum erstreckt.

5. Brennraumsonde nach einem der Ansprüche 1 bis 4, dadurch gekennzeichnet, daß zwischen Lichtleiter (1) und Hülle (2) eine im Querschnitt vorzugsweise kreisringförmige Klebekammer (4) angeordnet ist, die vollständig mit der Klebemasse gefüllt ist.

6. Brennraumsonde nach einem der Ansprüche 1 bis 4, wobei die Hülle (2) einen Verbindungsbereich (7) aufweist, über den die Brennraumsonde mit dem Zylinderkopf (8) einer Brennkraftmaschine verbindbar ist, dadurch gekennzeichnet, daß der Klebebereich weiter vom brennraumseitigen Ende der Brennraumsonde entfernt ist als der Verbindungsbereich (7).

7. Brennraumsonde nach Anspruch 6, dadurch gekennzeichnet, daß der Verbindungsbereich (7) von einem vom Umfang der Brennraumsonde radial nach außen abstehenden Flansch gebildet ist.

8. Optische Brennraumsonde mit einem transparenten Lichtleiter und einer diesen umgebenden Hülle vorzugsweise aus Metall, insbesondere nach einem der Ansprüche 1 bis 7, dadurch gekennzeichnet, daß die Hülle in mindestens einem Anlagebereich (14a,14b) an den Lichtleiter (1) heranreicht, wobei der Lichtleiter dort bei Raumtemperatur im Schiebesitz oder Gleitsitz in der Hülle geführt ist, und daß der Lichtleiter außerhalb dieses zumindest einen Anlagebereichs mittels einer Klebemasse mit der Hülle verklebt ist.

9. Brennraumsonde nach Anspruch 8, dadurch gekennzeichnet, daß der Klebebereich zwischen Lichtleiter (1) und Hülle (2) bezüglich der Längsrichtung der Brennraumsonde zwischen zwei Anlagebereichen (14a,14b) angeordnet ist und vorzugsweise direkt an diese angrenzt.

10. Brennraumsonde nach einem der Ansprüche 1 bis 9, dadurch gekennzeichnet, daß die Brennraumsonde - vorzugsweise im Bereich des brennraumfernen Endes - einen quer zur Längsrichtung des Lichtleiters verlaufenden Anschlag (15) für den Lichtleiter aufweist.

11. Brennraumsonde nach einem der Ansprüche 1 bis 10, dadurch gekennzeichnet, daß die Hülle (2) zwei- oder mehrteilig aufgebaut ist, wobei die Teile (2a,2b,2c) vorzugsweise miteinander verschraubt sind.

12. Brennraumsonde nach einem der Ansprüche 1 bis 11, dadurch gekennzeichnet, daß die Hülle (2) in einem brennraumseitigen Endbereich (l₄ der Brennraumsonde bei Raumtemperatur einen Abstand von vorzugsweise 1 bis 5 Zehntel Millimetern vom Lichtleiter aufweist.

13. Brennraumsonde nach Anspruch 12, dadurch gekennzeichnet, daß der brennraumseitige Endbereich (l₄) von einem gesonderten Vorderteil (2b) gebildet ist.
